# EUROPEAN PATENT APPLICATION

(11) **EP 2 395 601 A1**
(43) Date of publication of application: **14.12.2011**
(21) Application number: 09839709.4
(22) Date of filing: 07.12.2009
(51) Int. Cl.: H01Q 1/24, H04M 1/02, H04M 1/725

(54) **PORTABLE WIRELESS DEVICE**

(30) Priority: 09.02.2009 JP 2009027620
(71) Applicant: Sharp Kabushiki Kaisha, Osaka-shi, Osaka 545-8522 (JP)
(72) Inventor: OKAJIMA, Yusuke, Osaka 545-8522 (JP)
(74) Representative: Müller - Hoffmann & Partner
(86) International application number: PCT/JP2009/070496
(87) International publication number: WO 2010/089935

(57) **Abstract**

A mobile phone terminal (portable wireless device) of the present invention includes: a first housing; a slide plate fixed to the first housing; a second housing slidably attached to the slide plate; and an antenna attached to the first housing. The slide plate is constituted by a conductive part made from a metal and a nonconductive part made from an insulating material. The nonconductive part is provided so as to extend across the slide plate. According to the arrangement, it is possible to suppress a reduction in gain of the antenna, which reduction is generated due to a resonance current flowing through the slide plate in the portable wireless device.

## Description

### Technical Field

The present invention relates to a portable wireless device, particularly, a portable wireless device including two housings which are coupled with each other such that one of the housing is slidable.

### Background Art

Generally, mobile phone terminals and other portable wireless devices have a deformable arrangement so as to improve their portability. Typical examples of such a deformable arrangement encompass (i) an arrangement in which two housings are coupled with each other such that two housings can be folded to face each other, and (ii) an arrangement in which two housings are coupled with each other such that one of the two housings is slidable.

Patent Literatures 1 through 3 disclose mobile phone terminals each adopting the arrangement in which two housings are coupled with each other such that one of the two housings is slidable. Specifically, each of the mobile phone terminals disclosed in Patent Literatures 1 through 3 adopts an arrangement in which one of the two housings is slidable in a long-side direction of the other one of the two housing. However, short-side slide mobile phone terminals, PDAs (Personal Digital Assistants), and the like have also been on the market. The short-side slide mobile phone terminal or PDA adopts an arrangement in which two housings are coupled with each other such that one of the two housings is slidable in a short-side direction of the other one of the two housings.

### Citation List

Patent Literature 1
   Japanese Patent Application Publication, Tokukai, No. 2006-203806 A (Publication Date: August 3, 2006)
Patent Literature 2
   Japanese Patent Application Publication, Tokukai, No. 2006-319419 A (Publication Date: November 24, 2006)
Patent Literature 3
   Japanese Patent Application Publication, Tokukai, No. 2008-47949 A (Publication Date: February 28, 2008)

### Summary of Invention

### Technical Problem

A way to couple two housings of a portable wireless device with each other may be exemplified by provision of a slide plate. Here, the "slide plate" is a plate member made from a metal, which is (i) fixed to one of the two housings and (ii) attached to the other one of the two housings such that the other one of the two housings is slidable.

In the arrangement, however, the slide plate and an antenna which is built in one of the two housings are provided close to each other. This causes such a problem that the antenna is reduced in gain in a used frequency band due to a resonance current flowing through the slide plate. The problem can be avoided by using a slide plate made from a resin. However, the use of the slide plate made from a resin may be an unrealistic way to solve such a problem because the slide plate made from a resin is poor in strength and endurance.

The present invention is made in view of the problem. An object of the present invention is to suppress a reduction in gain of an antenna of a portable wireless device, which reduction is caused by a resonance current flowing through a slide plate.

### Solution to Problem

In order to attain the object, a portable wireless device of the present invention includes: a first housing; a plate member fixed to the first housing; a second housing slidably attached to the plate member; and an antenna attached to the first housing or the second housing, the plate member being constituted by a conductive part made from a metal, and a nonconductive part made from an insulating material, the nonconductive part being provided so as to extend across the plate member.

According to the arrangement, a width of the conductive part, in a direction orthogonal to a direction in which the nonconductive part extends across the plate member, is less than that of a plate member having no nonconductive part. This reduces the conductive part of the plate member in electrical length, as compared with the conductive part of the plate member having no nonconductive part. Accordingly, the conductive part of the plate member has a resonance frequency which is higher than that of the conductive part of the plate member having no nonconductive part. That is, the resonance frequency of the conductive part can be shifted away from the used frequency band. Therefore, it is possible to suppress the reduction in gain of the antenna, which reduction is generated due to an arrangement in which the antenna and the conductive part are provided close to each other.

In the portable wireless device of the present invention, the nonconductive part preferably extends across the plate member so as to intersect a center of the plate member, and the conductive part is preferably separated into a first conductive part and a second conductive part by the nonconductive part.

According to the arrangement, it is possible to, while ensuring a total area of the conductive part, reduce the width of the conductive part (a width in a direction orthogonal to a direction in which the nonconductive part extends across the plate member) to equal to or less than half of the width of the conductive part of the plate member having no nonconductive part. Accordingly, it becomes possible to sufficiently suppress the reduction in gain of the antenna without a reduction in strength and endurance of the plate member.

In the portable wireless device of the present invention, the nonconductive part is preferably in contact with a surface of the second housing, which surface faces the first housing, and the conductive part is preferably apart from the surface of the second housing.

According to the arrangement, it is possible to prevent the surface of the second housing, which surface faces the first housing, from being worn away due to physical contact between the surface of the second housing and the conductive part made from a metal. Further, it is possible to maintain a capacitive reactance between the second housing and the conductive part without causing the second housing and the conductive part to be in contact with each other.

In the portable wireless device of the present invention, the nonconductive part preferably has a groove or a hole which extends across the plate member in a direction in which the second housing is slidable, and the first housing and the second housing are preferably electrically connected to each other via a wiring line which is provided in the groove or the hole.

According to the arrangement, it is possible to prevent breaking of the wiring line for electrically connecting the first housing and the second housing to each other, which breaking is caused by physical contact between the wiring line and the conductive part while the second housing is being slid, for example.

In the portable wireless device of the present invention, the nonconductive part is preferably made from a resin.

According to the arrangement, it is possible to (i) form the nonconductive part by an insert molding method and (ii) bond the nonconductive part and the conductive part with each other without carrying out welding. That is, it is possible to produce the plate member constituted by the conductive part and the nonconductive part economically and precisely.

The portable wireless device of the present invention preferably further includes a reactance element electrically connected between the first housing and the plate member, or between the second housing and the plate member.

In a case where (i) the first housing and the second housing are electrically connected to each other without the reactance element, and (ii) a high-frequency signal is applied to a power feeding point of the antenna while the portable wireless device is in an open state, a negative phase sequence current is generated in the vicinity of the power feeding point, and flows through the first and second housings. This reduces the gain of the antenna. According to the arrangement described above, the reactance element is electrically connected between the first housing and the plate member or between the second housing and the plate member, so that a direction in which the current flows through the second housing can be inverted by the reactance element. This suppresses the reduction in gain of the antenna.

### Advantageous Effects of Invention

As described above, according to the present invention, (i) the first and second housings are coupled with each other via the plate member, which is constituted by the conductive part made from a metal and the nonconductive part made from an insulating material, and (ii) the nonconductive part is provided so as to extend across the plate member. This causes (i) the conductive part of the plate member to have a width (a width in a direction vertical to a direction in which the nonconductive part extends across the plate member) less than that of the conductive part of a conventional plate member having no nonconductive part, and (ii) the plate member to have a resonance frequency higher than that of the conventional plate member having no nonconductive part. Therefore, it is possible to suppress the reduction in gain of the antenna in the used frequency band by shifting the resonance frequency of the plate member away from the used frequency band, which reduction is generated due to the resonance current.

### Brief Description of Drawings

Fig. 1

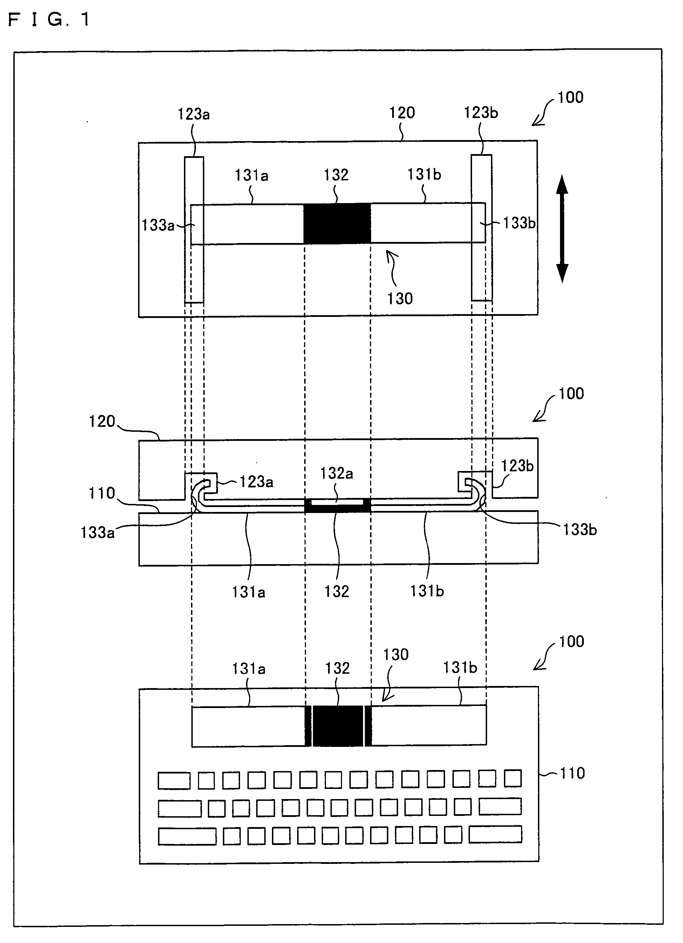

   Fig. 1 shows an embodiment of the present invention: an upper view of Fig. 1 is a bottom view of a second housing; a middle view of Fig. 1 is a cross-sectional view of a mobile phone terminal; and a lower view of Fig. 1 is a top view of a first housing.
Fig. 2

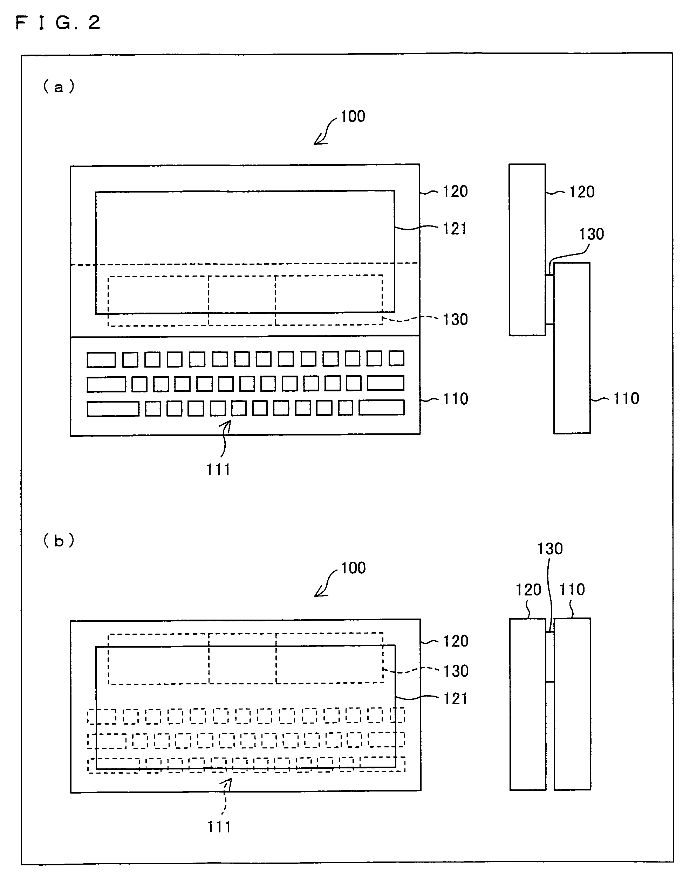

   Fig. 2 shows the embodiment of the present invention: (a) of Fig. 2 illustrates the mobile phone terminal which is in an opened state, as being viewed from above (a left view of (a) of Fig. 2) and from a side (a right view of (a) of Fig. 2); and (b) of Fig. 2 illustrates the mobile phone terminal in a closed state, as being viewed from above (a left view of (b) of Fig. 2) and from a side (a right view of (b) of Fig. 2).
Fig. 3

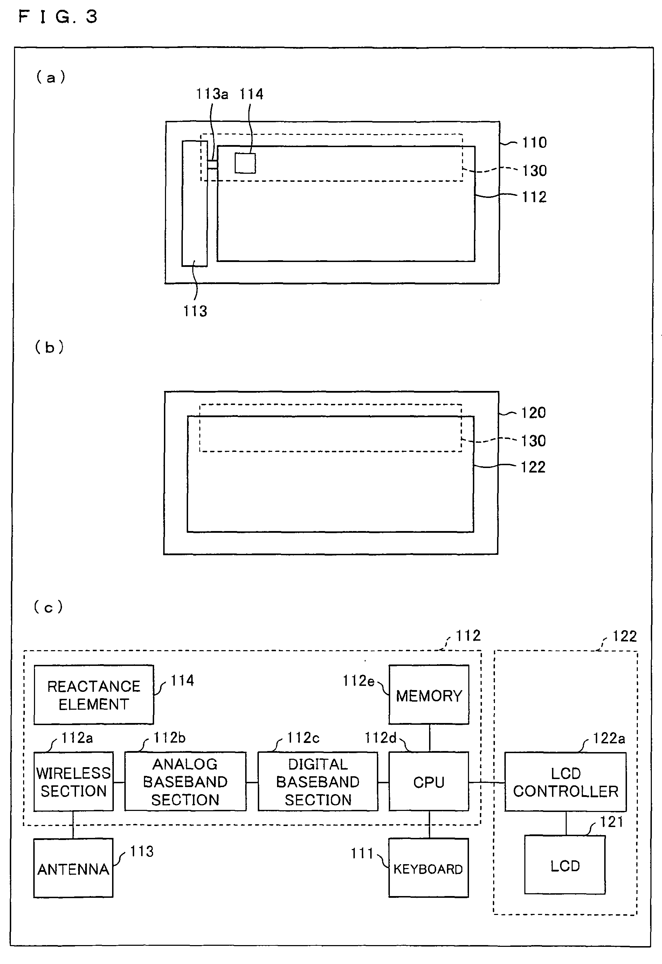

   Fig. 3 shows the embodiment of the present invention: (a) of Fig. 3 is a perspective top view illustrating the first housing; (b) of Fig. 3 is a perspective top view illustrating the second housing; and (c) of Fig. 3 is a block diagram illustrating the mobile phone terminal.
Fig. 4

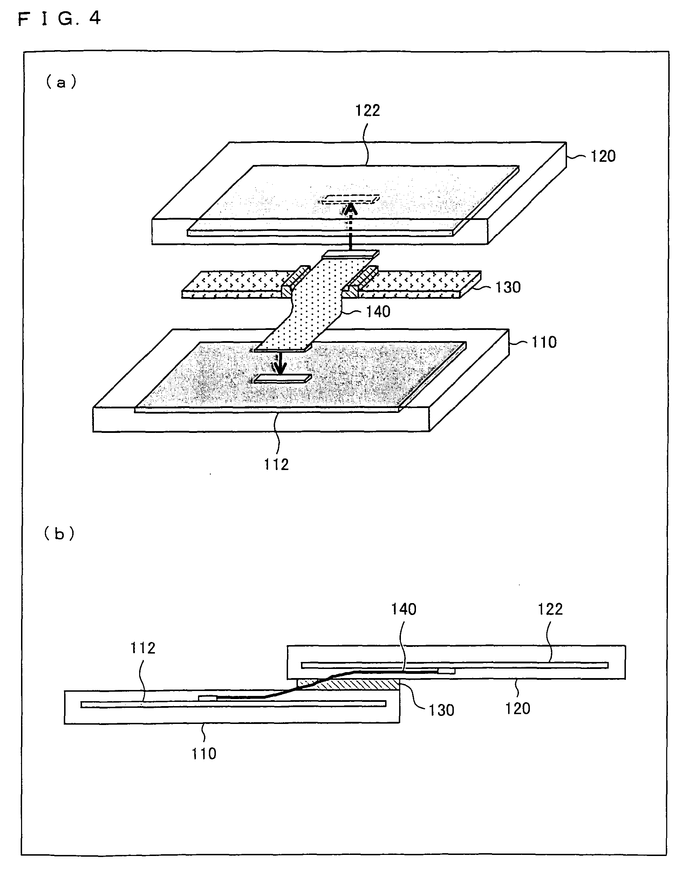

   Fig. 4 shows the embodiment of the present invention: (a) of Fig. 4 is an exploded perspective view illustrating the mobile phone terminal; and (b) of Fig. 4 is a cross-sectional view illustrating the mobile phone terminal.
Fig. 5

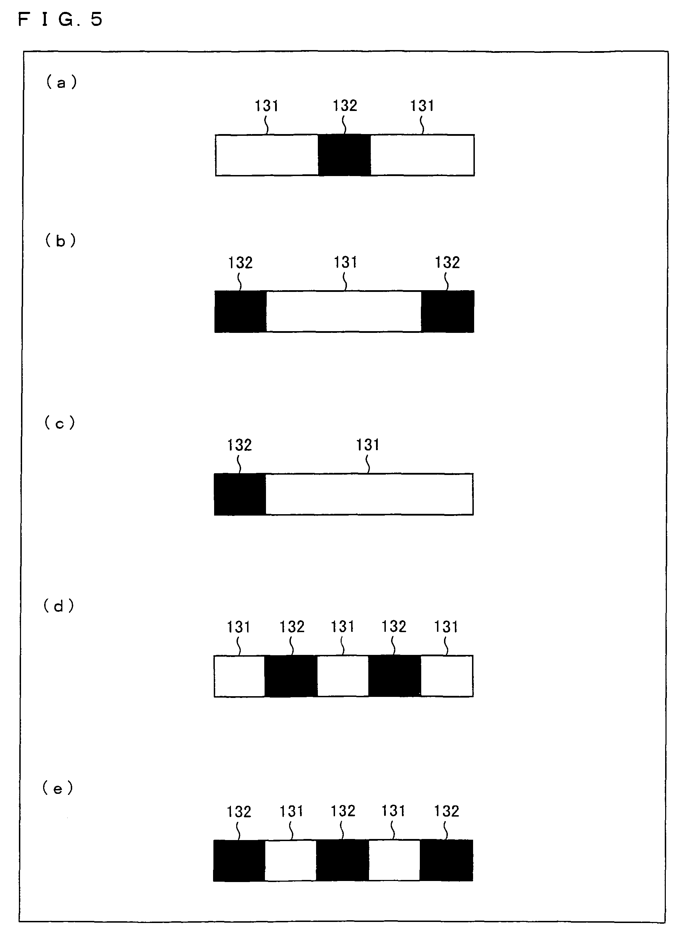

   Fig. 5 is a view illustrating various combinations of a conductive part and a nonconductive part of a slide plate, in accordance with the embodiment of the present invention.
Fig. 6

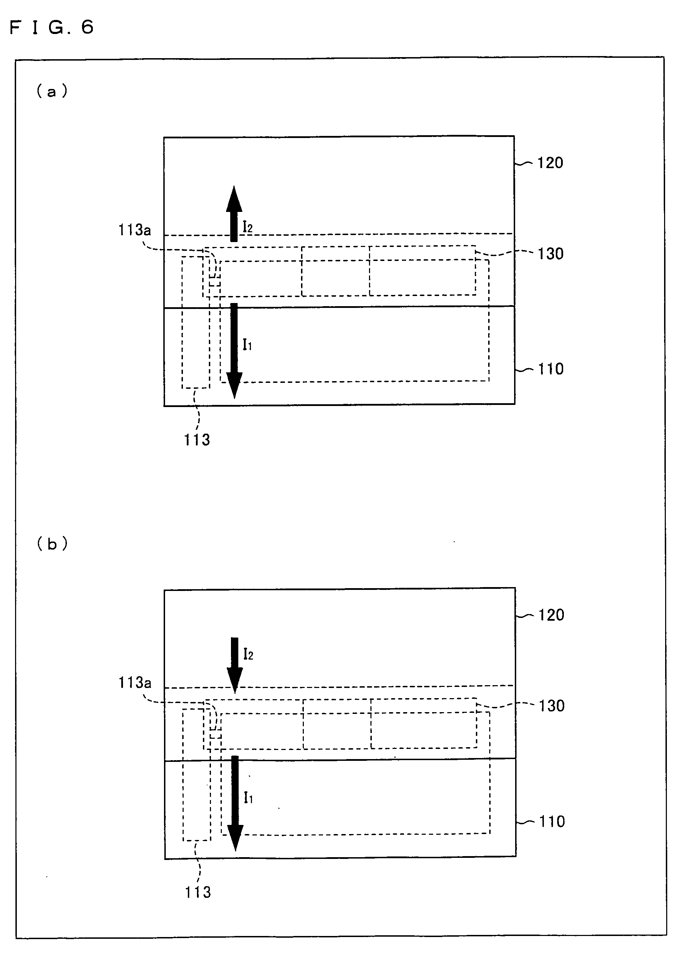

   Fig. 6 is a view showing in which direction a current flows in the first housing, and in which direction a current flows in the second housing, in accordance with the embodiment of the present invention.
Fig. 7

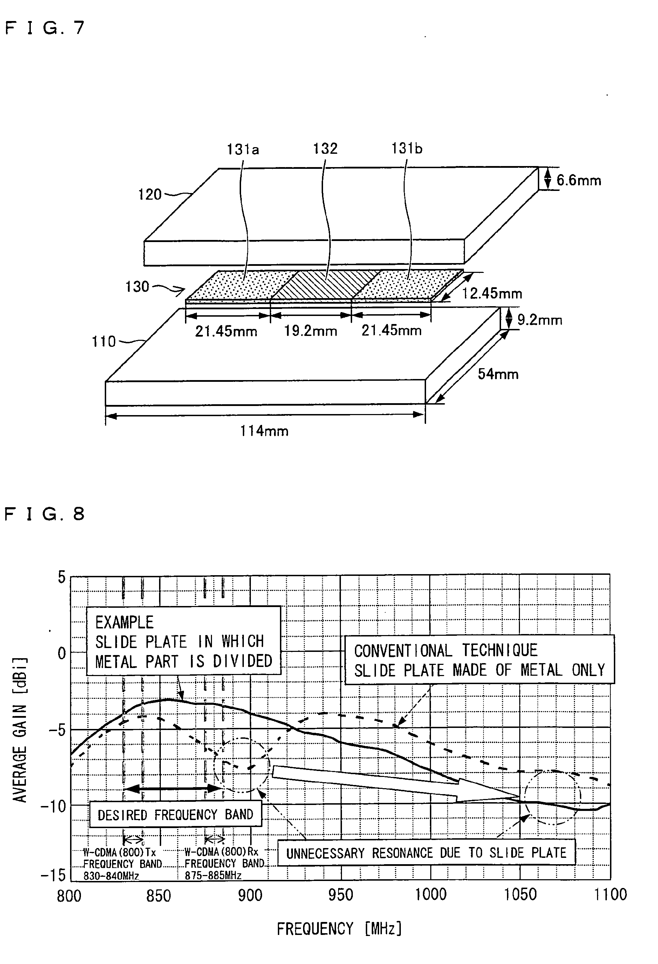

   Fig. 7 shows an example of the present invention, in which the mobile phone terminal is subjected to a verification experiment.
Fig. 8
   Fig. 8 is a graph showing a frequency characteristic of an average gain of an antenna, which frequency characteristic was obtained in the verification experiment of the example of the present invention.
Fig. 9

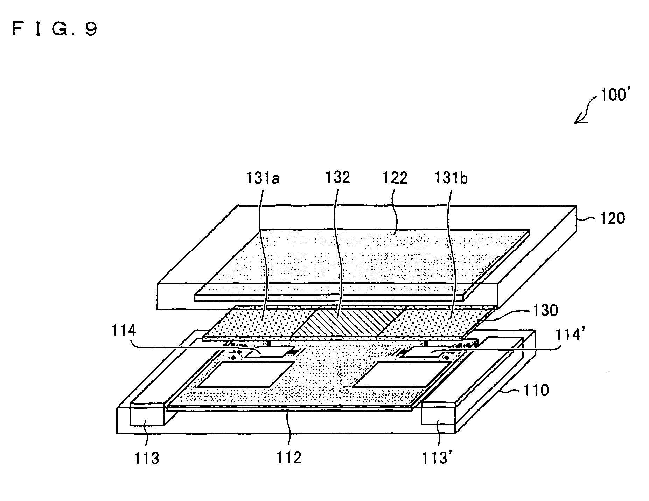

   Fig. 9 is an exploded perspective view illustrating a mobile phone terminal in accordance with another embodiment of the present invention.
Fig. 10

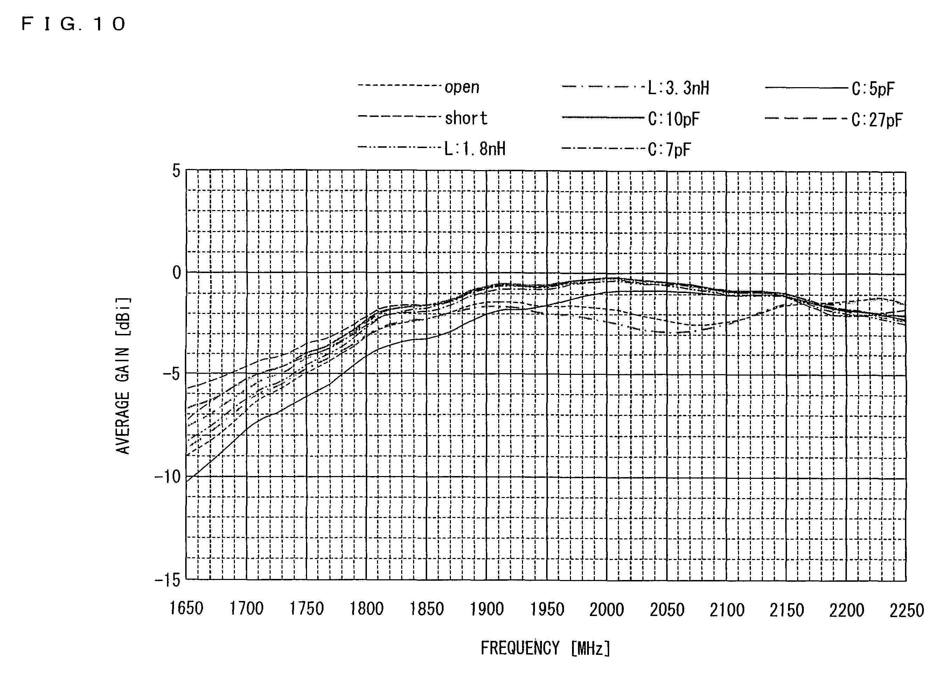

   Fig. 10 is a graph showing a frequency characteristic of an average gain of an antenna, which frequency characteristic is obtained in a verification experiment of another example of the present invention.

### Description of Embodiments

One embodiment of a portable wireless device of the present invention is described below with reference to drawings. In the present embodiment, the portable wireless device is realized as a mobile phone terminal for carrying out wireless communication with a base station for the purpose of making a telephone call. Therefore, the portable wireless device of the present embodiment is, hereinafter, simply referred to as the mobile phone terminal.

Note, however, that the present embodiment is not limited to the mobile phone terminal for carrying out wireless communication with the base station for the purpose of making a telephone call. The present embodiment is applicable to a general portable wireless device for sending/receiving, via an antenna, a carrier wave in which some sort of signal is embedded.

### (Outer appearance of mobile phone terminal)

First, the following description deals with an outer appearance of a mobile phone terminal 100 of the present embodiment with reference to Fig. 2. (a) of Fig. 2 illustrates the mobile phone terminal 100 in an open state as being viewed from above (a left view of (a) of Fig. 2) and from a side (a right view of (a) of Fig. 2), while (b) of Fig. 2 illustrates the mobile phone terminal 100 in a closed state as being viewed from above (a left view of (b) of Fig. 2) and from a side (a right view of (b) of Fig. 2).

Broadly, the mobile phone terminal 100 is a mobile phone terminal including a first housing 110 and a second housing 120. These two housings 110 and 120 are coupled with each other via a slide plate (plate member) 130 so that an upper surface of the first housing 110 and a bottom surface of the second housing 120 face each other.

The slide plate 130 is a plate member constituted by a conductive part 131 and a nonconductive part 132 (later described). The slide plate 130 is fixed to the upper surface of the first housing 110 on a rear side as being viewed from a user's side. The second housing 120 is attached to the slide plate 130 so as to be slidable in a short-side direction of the first housing 110.

An open state of the mobile phone terminal 100 is realized by sliding forward the second housing 120 as being viewed from the user's side. In this state, the upper surface of the first housing 110 is partially covered by the second housing 120 on the rear side, while being partially exposed on the front side (see (a) of Fig. 2). On the other hand, a closed state of the mobile phone terminal 100 is realized by sliding backward the second housing 120 as being viewed from the user's side. In this state, the entire upper surface of the first housing 110 is covered by the second housing 120 (see (b) of Fig. 2).

A key board 111 is provided on the upper surface of the first housing 110 on the front side (see (a) of Fig. 2). The keyboard 111 can be used while the mobile phone terminal 100 is in the open state. Meanwhile, an LCD (Liquid Crystal display) 121 is provided on an upper surface of the second housing 120 (see (a) and (b) of Fig. 2). The LCD 121 can be used regardless of whether the mobile phone terminal 100 is in the open state or in the closed state.

The mobile phone terminal 100 of the present embodiment is a short-side slide type mobile phone terminal whose second housing 120 is slidable in the short-side direction of the first housing 110. In a case where the mobile phone terminal 100 is in the open state, a horizontally long region of the upper surface of the first housing 110 is exposed as being viewed from the user's side. The keyboard 111 having a QWERTY key arrangement or the like can be provided in such a long region. Note, however, that the present embodiment is not limited to the short-side slide type mobile phone terminal. The present embodiment is also applicable to a long-side slide type mobile phone terminal whose second housing 120 having the LCD 121 is slidable in a long-side direction of the first housing 110 on which the keyboard 111 is provided. In a case where the long-side slide type mobile phone terminal is in the open state, a vertically long region of the upper surface of the first housing 110 is exposed as being viewed from the user's side. A numeric keypad having a phone key arrangement or the like can be provided in such a long region.

### (Internal arrangement of mobile phone terminal)

The following description deals with an internal arrangement of the mobile phone terminal 100 with reference to Fig. 3. (a) of Fig. 3 is a perspective top view illustrating the first housing 110, (b) of Fig. 3 is a perspective top view illustrating the second housing 120, and (c) of Fig. 3 is a block diagram illustrating an example of an arrangement of the mobile phone terminal 100.

An antenna 1 13 and a first substrate 112 are built in the first housing 110 (see (a) of Fig. 3). A wireless section 112a, an analog baseband section 112b, a digital baseband section 112c, a CPU 112d, and a memory 112e are provided on the first substrate 112 (see (c) of Fig. 3). The antenna 113 is connected to, via a power feeding point 113a, the wireless section 112a provided on the first substrate 112. Via the antenna 113, the mobile phone terminal 100 carries out, by using a specific frequency band, wireless communication with the base station for the purpose of making a telephone call.

The first substrate 112 built in the first housing 1 10 and a conductive part 131a of the slide plate 130 are electrically connected to each other via a reactance element 114 which is provided on the first substrate 112. Functions/effects of the reactance element 114 will be described later in detail.

Meanwhile, a second substrate 122 is built in the second housing 120 (see (b) of Fig. 3). An LCD controller 122a, which is connected to the LCD 121, is provided on the second substrate 122 (see (c) of Fig. 3). The first substrate 112 and the second substrate 122 are connected to each other via a flexible cable 140 (see (c) of Fig. 3). The LCD controller 122a receives a video signal from the CPU 112d via the flexible cable 140, so as to drive the LCD 121 on the basis of the video signal.

In the mobile phone terminal 100, a property of the antenna 113 is influenced by a current flowing through the slide plate 130. This is because the power feeding point 113a and the slide plate 130 are arranged close to each other (see (a) of Fig. 3). Particularly, there is a significant reduction in gain of the antenna 113 in the used frequency band due to a resonance current flowing through the slide plate 130, in a case where the current flowing on the slide plate 130 has a resonance frequency that is close to the used frequency band.

According to the present embodiment, it is proposed that the slide plate 130 has a nonconductive part, as described below. This shifts the resonance frequency of the slide plate 130 to a higher frequency side so that the reduction in gain of the antenna 113 in the used frequency band, due to the resonance current flowing through the slide plate 130, is suppressed.

### (Arrangement of slide plate)

The following description deals with an arrangement of the slide plate 130 included in the mobile phone terminal 100 with reference to Fig. 1. An upper view of Fig. 1 illustrates the second housing 120 as being viewed from below, a middle view of Fig. 1 illustrates the mobile phone terminal 100 cross-sectionally, and a lower view of Fig. 1 illustrates the first housing 110 as being from above. Note that components provided inside the first and second housings are omitted in the cross-sectional view of the mobile phone terminal 100 so that the arrangement of the mobile phone terminal 100 is simply illustrated.

In the present embodiment, the slide plate 130 has a top surface of a rectangular shape. Note, however, that the present embodiment is not limited to this, and the shape of the slide plate 130 can be variously modified, provided that the second housing 120 can be attached to the slide plate 130 so as to be slidable. For example, the rectangular shape of the slide plate 130 of the present embodiment can be modified such that (i) long sides of the rectangular shape are excurved/incurved, or (ii) corners of the rectangular shape are rounded.

The slide plate 130 is constituted by a conductive part 131 made from a metal, and a nonconductive part 132 made from a resin (insulating material) (see the middle view of Fig. 1). Further, the nonconductive part 132 is arranged so as to extend across a center of the slide plate 130, while the conductive part 131 is separated into conductive parts 131a and 131b by the nonconductive part 132 (see the lower view of Fig. 1). Accordingly, in a case where (i) the slide plate 130 has a long-side width of A [mm], and (ii) the nonconductive part 132 has a long-side width of B [mm], each of the conductive parts 131a and 13ab has a long-side width of approximately (A - B)/2 [mm] (a long-side width is a width in a direction orthogonal to a direction in which the nonconductive part 132 extends across the slide plate 130).

The resonance frequency of the slide plate 130 is inversely proportional to an electrical length of the slide plate 130. Therefore, it is possible to shift the resonance frequency of the slide plate 130 to a higher frequency side by reducing the width of the conductive part 131 of the slide plate 130. That is, it is possible to cause the resonance frequency of the slide plate 130 to be farther from the used frequency band of the slide plate 130. This suppresses the reduction in gain of the antenna 1 13 in the used frequency band, which reduction is generated due to the resonance current flowing through the slide plate 130.

Note that a strength of slide plate 130 itself, or a coupling strength between the slide plate 130 and the first housing 110 and second housing 120 is reduced in a case where a size of the entire slide plate 130 is reduced or the slide plate 130 is made from a resin only. In contrast, the slide plate 130 of the present embodiment has the nonconductive part 132. This arrangement makes it possible to suppress the reduction in gain of the antenna 113 in the used frequency band while avoiding the above problems.

Further, the slide plate 130 is arranged such that the nonconductive part 132 is in contact with a bottom surface of the second housing 120, while the conductive part 131 is apart from the bottom surface of the second housing 120 (see the middle view of Fig. 1). That is, the nonconductive part 132 serves as a spacer causing the conductive part 131 and the second housing 120 to be apart from each other. The conductive part 131 and the second housing 120 are arranged apart from each other so that it becomes possible to maintain a constant capacitive reactance between the conductive part 131 and the second housing 120 by preventing the conductive part 131 and the second housing 120 from being in contact with each other.

Furthermore, the second housing 120 and the slide plate 130 are coupled with each other such that (i) each of a left end 133a and a right end 133b of the slide plate 130 is bent so as to have a half-circle shape, and (ii) the left end 133a and the right end 133b are fitted to a left L-shaped groove 123a and a right L-shaped groove 123b formed on the bottom surface of the second housing 120, respectively (see the middle view of Fig. 1). Accordingly, the side plate 130 can support, via the nonconductive part 132, the second housing 120 not only from below via the nonconductive part 132 but also from a left side via the left end 133a, from a right side via the right end 133b, and from above via the left end 133a and the right end 133b. Therefore, the slide plate 130 can hold the second housing 120 highly stably so that the second housing 120 can be slid highly stably.

Further, a groove 132a is formed on an upper surface of the nonconductive part 132, so as to extend across the nonconductive part 132 in a direction in which the second housing 120 is slidable (see the middle and lower views of Fig. 1). The flexible cable 140, which connects the first substrate 112 built in the first housing 110 and the second substrate 122 built in the second housing 120 to each other, is provided so as to extend through the groove 132a (see Fig. 4). This can prevent the flexible cable 140 from being broken by sliding movement of the second housing 120. Alternatively, similar effects can be realized by forming, in place of the groove 132a, a hole (through hole) through the nonconductive part 132 in the direction in which the second housing 120 is slid.

Note that the slide plate 130 can have another arrangement in which the nonconductive part 132 is provided so as to extend across an end(s) of the slide plate 130, instead of the arrangement in which the nonconductive part 132 is provided so as to extend across the center of the slide plate 130 (see (a) of Fig. 5). Specifically, the slide plate 130 can be arranged such that (i) the nonconductive part 132 is provided at each of the ends of the slide plate 130 (see (b) of Fig. 5), and the conductive part has a width of approximately A - 2B [mm], or (ii) the nonconductive part is provided in one of ends of the slide plate (see (c) of Fig. 5), and the conductive part has a width of approximately A - B [mm].

In the present specification, the "... extends across the slide plate (plate member) 130" means that extension over from a point on a periphery of the slide plate 130 to another point on the periphery. In a case where the slide plate 130 has a rectangular shape, as in the present embodiment, for example, the "... extends across the slide plate (plate member) 130" means extension over from one of lines of the rectangular shape to an opposite one of lines of the rectangular shape.

Further, the slide plate 130 can have a plurality of nonconductive parts. Specifically, the slide plate 130 can be arranged such that (i) N nonconductive parts are provided so as to separate the conductive part 131 of the slide plate 130 into N + 1 pieces (see (d) of Fig. 5), and each of the pieces of conductive part 131 has a width of approximately (A - N × B)/(N + 1) [mm], or (ii) N nonconductive parts are provided so as to separate the conductive part 131 of the slide plate 130 into N - 1 pieces (see (e) of Fig. 5), and each of the pieces of conductive part 131 has a width of approximately (A - N × B)/(N - 1) [mm].

In any one of (a) through (e) of Fig. 5, (i) the conductive part 131 of the slide plate 130 has a width (the width in the direction orthogonal to the direction in which the nonconductive part 132 extends across the slide plate 130) less than that of the conductive part 131 of the slide plate 130 having no nonconductive part 132, and (ii) the slide plate 130 has a resonance frequency higher than that of the slide plate 130 having no nonconductive part 132.

Note that the direction in which the nonconductive part 132 extends across the slide plate 130 is not limited to the short-side direction, and may be another direction, such as the long-side direction.

Further, the nonconductive part 132 can be made from any insulating material. For example, the nonconductive part 132 can be made from ceramics or the like, instead of a resin. Note, however, that it is preferable to use a resin as the material of the nonconductive part 132, because (i) it is easy to process the resin into a desired shape by an insert molding method or the like, and (ii) it is possible to bond the nonconductive part 132 made from the resin with the conductive part 131 without carrying out welding. Furthermore, the nonconductive part 132 made from a resin has such an advantage that in a case where the bottom surface of the second housing 120 is in contact with not the conductive part 131 made from a metal but the nonconductive part made from a resin, it is possible to prevent the bottom surface of the second housing 120 from being worn away.

### (Reactance element)

The following description deals with functions/effects of the reactance element 114 provided on the first substrate 112 with reference to Fig. 6. Fig. 6 is a view showing (i) a direction in which a current flows in the first housing 110, and (ii) a direction in which a current flows in the second housing 120, in a case where a high-frequency signal is applied to the power feeding point 113a while the mobile phone terminal 100 is in the open state.

In a case where (i) the first housing 110 and the second housing 120 are electrically connected to each other, and (ii) the high-frequency signal is applied to the power feeding point 1 13a while the mobile phone terminal 100 is in the open state, a current I1 flows through the first housing 110 and a current 12 whose phase is opposite to that of the current I1 flows through the second housing 120 (see (a) of Fig. 6). In this case, the antenna 113 is reduced in gain.

However, it is possible to cause the current I1 flowing though the first housing 110 and the current I2 flowing through the second housing 120 to have the same phase by electrically connecting the reactance element 114 between the first housing 110 and the second housing 120. This is because the provision of the reactance element 114 causes the direction in which the current I2 flows through the second housing 120 to be inverted (see (b) of Fig. 6). This can suppress the reduction in gain of the antenna 113.

In the mobile phone terminal 100 of the present embodiment, the first substrate 112 built in the first housing 110 and the conductive part 131a of the slide plate 130 are electrically connected to each other via the reactance element 114 so that the direction in which the current I2 flows through the second housing 120 is inverted. Note, however, that the reactance element 114 can be provided anywhere provided that it is electrically connected between the first housing 110 and the second housing 120. For example, it is possible to invert the direction in which the current I2 flows through the second housing 120 by electrically connecting, via the reactance element 114, the second substrate 122 built in the second housing 120 and the conductive part 131 of the slide plate 130 to each other.

The reactance element 114 should shift the phase of the current I2 so as to invert the direction in which the current I2 flows through the second housing 120. The reactance element 114 may be a coil (chip inductor), a capacitor (chip capacitor), or a resonance circuit constituted by a combination of these, for example. Each constant (inductance and capacitance) of the reactance element 114 can be experimentally determined so as to suppress the reduction in gain of the antenna 113 in the used frequency band as much as possible.

Note that a capacitive reactance and an inductive reactance exist between the first housing 110 and the second housing 120 in accordance with a size of the conductive part 131 of the slide plate 130, regardless of whether or not the first housing 110 and the second housing 120 are electrically connected to each other. Therefore, as a size of the conductive part 131 of the slide plate 130 becomes large, it becomes more difficult to suppress, as much as possible, the reduction in gain of the antenna 113 by use of the reactance element 114 electrically connected between the first housing 110 and the second housing 120. On the other hand, in the mobile phone terminal 100 of the present embodiment, the provision of the nonconductive part 132 as a part of the slide plate 130 reduces the size of the conductive part 131, as compared with a conventional slide plate. Therefore, it is possible to suppress the reduction in gain of the antenna 113 as much as possible by providing the reactance element 114, more easily than a conventional mobile phone terminal.

Note that each of the capacitive reactance and the inductive reactance, existing between the first housing 110 and the second housing 120, is determined in accordance with not only the size of the conductive part 131 but also a shape, a position, a connection state (whether or not the conductive part 131 and the first substrate 112 are electrically connected to each other, and whether or not the conductive part 131 and the second substrate 122 are electrically connected to each other), etc. of the conductive part 131. For this reason, it is possible to adjust the reactance between the first housing 110 and the second housing 120 by modifying an area, a shape, a position, a connection state, etc. of the conductive part 131. In this manner, it is possible to invert, without additionally providing the reactance element 114, the direction in which the current I2 flows through the second housing 120.

### (Verification of effects)

The following description deals with effects realized by arranging the slide plate 130 to have the nonconductive part 132, with reference to Figs. 7 and 8. Fig. 7 is a view illustrating an example of the mobile phone terminal 100 with which a verification experiment was carried out, and Fig. 8 is a graph showing a frequency characteristic of an average gain of the antenna 113, which frequency characteristic was obtained as a result of the verification experiment.

The verification experiment was carried out by use of a mobile phone terminal 100 in which a first housing 110 and a second housing 120 are coupled with each other via a slide plate 130. The first housing 110 had a long side of 114 mm, a short side of 54 mm, and a thickness of 9.2 mm, the second housing 120 had a long side of 114 mm, a short side of 54 mm, and a thickness of 6.6 mm, and the slide plate 130 had a long side of 62.1 mm, and a short side of 12.45 mm. A nonconductive part 132 having a width of 19.2 mm is provided so as to extend across a center of the slide plate 130, which center is defined in a long-side direction, so that each of conductive parts 131, provided adjacent to the nonconductive part 132, respectively, has a width of 21.45 mm. Under the circumstances, a frequency characteristic of an average gain of an antenna 113 was measured. Further, the verification experiment was also carried out by use of another mobile phone terminal which had the same arrangement described above except that a slide plate, having the same size described above but being made from a metal only, was used in place of the aforementioned slide plate 130. An inverted L antenna for 800 MHz band, having a physical length of approximately 50 mm, was used as the antenna 113. Note, however, that the antenna 113 was placed on a base made from a dielectric material so that an electrical length of the antenna 113 was longer than 50 mm.

In the case of the mobile phone terminal 100 including the slide plate made from a metal only, the gain of the antenna 113 was reduced in the 800 MHz band due to a resonance current flowing through the slide plate (see a dotted line of Fig. 8). On the other hand, in the case of the mobile phone terminal 100 including the slide plate 130 having the conductive parts each having the width of 21.45 mm as a result of the provision of the nonconductive part 132, the reduction in gain of the antenna 113 was suppressed in the 800 MHz band due to a shift of the resonance frequency of the slide plate 130 to a high frequency side (see a full line of Fig. 8).

In the present example, the mobile phone terminal 100 using the 800 MHz band as the used frequency band was used for the verification of the effects of the present embodiment. However, as a matter of fact, the effects of the present embodiment is not limited in the 800 MHz band but can be realized in a used frequency band other than the 800 MHz band. For example, it is possible to obtain effects similar to those verified in the present example with a mobile phone terminal using, as the used frequency band, 900 MHz band, 1.7 GHz band, 1.8 GHz band, or 2 GHz band, by appropriately adjusting a size of the conductive part 131 of the slide plate. Further, it is possible to obtain effects similar to those of the present example in (i) data communication by use of Bluetooth (registered trademark) using 2.4 GHz band as the used frequency band, or (ii) receiving a broadband wave using a VHF band or an UHF band as the used frequency band.

Moreover, effects realized by electrically connecting the first substrate 112 built in the first housing 110 and the conductive part 131 a of the slide plate 130 to each other via the reactance element 114 were also verified. Fig. 10 is a graph showing the frequency characteristic of the average gain of the antenna, obtained as a result of the verification experiment, which was carried out by use of a reactance element having an inductance in a range of 1.8 nH to 3.3 nH, or a capacitance in a range of 5 pF to 27 pF. Note that Fig. 10 also shows a frequency characteristic in each of (i) a case where no reactance element was provided (short), and (ii) a case where the first housing 110 and the second housing 120 were not electrically connected (open).

As shown in Fig. 10, the frequency characteristic of the average gain of the antenna was changed in accordance with a change in inductance or capacitance of the reactance element 114. For example, at a frequency in a range of 2100 MHz to 2220 MHz, the antenna has a higher average gain with the reactance element 114 having a small capacitance (7 pF) than with no reactance element 114. Thus, the example shows that the gain can be improved in a specific frequency band by use of a reactance element 114 having an appropriate reactance value. Note, however, that the result only depends on the mobile phone terminal subjected to the verification experiment. It is clear that how the inductance or the capacitance of the reactance element 114 and the frequency characteristic of the obtained average gain of the antenna is related to each other depends on a size, an internal arrangement (such as a capacitance of the slide plate 130 and a capacitance of the first housing 110), etc. of the mobile phone terminal. Therefore, it is preferable to appropriately determine, in accordance with the mobile phone terminal to be used, (i) the appropriate inductance or capacitance, or (ii) whether to use the reactance element 114.

### (Modified example)

Ultimately, the following description deals with a modified example of the mobile phone terminal 100 of the present embodiment with reference to Fig. 9. Fig. 9 is a view illustrating a mobile phone terminal 100' of the present modified example.

The main difference between the mobile phone terminal 100 and the mobile phone terminal 100' is such that (i) in addition to an antenna 113 via which wireless communication is carried out between the mobile phone terminal 100' and a base station for the purpose of making a telephone call, the mobile phone terminal 100' includes an antenna 113' for receiving a broadcast wave transmitted from a broadcast station, and (ii) in the mobile phone terminal 100', the first substrate 112 built in a first housing 110 and a conductive part 131 b of a slide plate 130 are electrically connected to each other via a reactance element 114' provided on the first substrate 112.

According to the arrangement illustrated in Fig. 9, it is possible to (i) suppress a reduction in gain of the antenna 113 by shifting a resonance frequency of the conductive part 131a of the slide plate 130 to be outside a used frequency band (the frequency band used for the wireless communication between the mobile phone terminal 100' and the base station) of the antenna 113, and also (ii) suppress a reduction in gain of the antenna 113' by shifting a resonance frequency of a conductive part 131b of the slide plate 130 to be outside a used frequency band (the frequency band which is used by the broadcast station for broadcasting) of the antenna 113'.

Further, according to the arrangement, the reactance element 114 electrically connected to the conductive part 131a and the reactance element 114' electrically connected to the conductive part 131b are independently provided, so that constants of these two reactance elements can be adjusted independently and appropriately. That is, it is possible to (i) set the constants of the reactance element 114 so as to suppress the reduction in gain of the antenna 113 as much as possible (so as to invert a direction in which a current flows through a second housing 120 while the antenna 113 is supplied with an electric power), and simultaneously (ii) set the constants of the reactance element 114' so as to suppress the reduction in gain of the antenna 113' as much as possible (so as to invert the direction in which the current flows through the second housing 120 while the antenna 113' is supplied with the electric power).

### Industrial Applicability

The present invention is applicable to a portable wireless device in which two housings are coupled with each other so that one of the two housings is slidable. Particularly, the present invention is suitably applicable to a mobile phone terminal or a PDA.

### Reference Signs List

100: Mobile phone terminal (portable wireless device)
110: First housing
111: Keyboard
112: First substrate
113: Antenna
114: Reactance element
120: Second housing
121: LCD
122: Second substrate
130: Slide plate (plate member)
131, 131a, 131b: Conductive part
132: Nonconductive part
132a: Groove
140: Flexible cable (wiring line)

## Claims

1. A portable wireless device comprising:
a first housing;
a plate member fixed to the first housing;
a second housing slidably attached to the plate member; and
an antenna attached to the first housing or the second housing,
the plate member being constituted by a conductive part made from a metal, and a nonconductive part made from an insulating material,
the nonconductive part being provided so as to extend across the plate member.

2. The portable wireless device as set forth in claim 1, wherein:
the nonconductive part extends across the plate member so as to intersect a center of the plate member; and
the conductive part is separated into a first conductive part and a second conductive part by the nonconductive part.

3. The portable wireless device as set forth in claim 1 or 2, wherein:
the nonconductive part is in contact with a surface of the second housing, which surface faces the first housing; and
the conductive part is apart from the surface of the second housing.

4. The portable wireless device as set forth in any one of claims 1 through 3, wherein:
the nonconductive part has a groove or a hole which extends across the plate member in a direction in which the second housing is slidable; and
the first housing and the second housing are electrically connected to each other via a wiring line which is provided in the groove or the hole.

5. The portable wireless device as set forth in any one of claims 1 through 4, wherein:
the nonconductive part is made from a resin.

6. The portable wireless device as set forth in any one of claims 1 through 5, further comprising:
a reactance element electrically connected between the first housing and the plate member, or between the second housing and the plate member.
